# FASCICULE DE BREVET EUROPEEN

(11) **EP 2 629 048 B1**
(45) Date de publication et mention de la délivrance du brevet: **24.10.2018**
(21) Numéro de dépôt: 12191264.6
(22) Date de dépôt: 05.11.2012
(51) Int. Cl.: G01B 5/012, G01B 11/00

(54) **PALPEUR**
MESSTASTER
TOUCH PROBE

(30) Priorité: 20.02.2012 EP 12156134
(43) Date de publication de la demande: 21.08.2013
(73) Titulaire: TESA SA, 1020 Renens (CH)
(72) Inventeur: Vullioud, Benjamin, 1124 Gollion (CH); Mariller, Serge, 1033 Cheseaux-sur-Lausanne (CH); Meleddu, Antonio, 1007 Lausanne (CH)
(74) Mandataire: P&TS SA (AG, Ltd.)

(56) Documents cités:
- WO-A2-2012/007561
- JP-A- 2007 101 491
- US-A- 5 118 946
- US-A- 5 118 956
- US-A1- 2004 125 382
- US-A1- 2006 070 253
- US-A1- 2011 013 199

## Description

### Domaine technique

La présente invention concerne des palpeurs ou sondes de contact pour des machines de mesure de coordonnées et notamment, mais pas exclusivement, des sondes de contact de type à déclenchement.

### Etat de la technique

Les palpeurs et leur utilisation avec des machines de mesure pour mesurer des coordonnées de la surface d'une pièce mécanique sont bien connus dans le domaine de la métrologie. Dans un cas typique une sonde de contact comporte une interface mécanique pour le montage sur la plateforme mobile d'une machine de mesure, et un stylet, avec une sphère en rubis à son extrémité, destiné à contacter la surface à mesurer. Lorsque le stylet touche la pièce et est déplacé de sa position de repos, la sonde déclenche un signal électrique, indiquant qu'un contact a eu lieu. Ce signal est transmis à une unité de contrôle qui enregistre les coordonnées instantanées de la machine et calcule les coordonnées du point de contact sur la pièce.

On connait également des sondes analogiques, dites aussi sondes à balayage, capables de mesurer la déflexion du stylet selon un ou plusieurs axes. Ces sondes sont utilisées, comme leur nom l'indique, en balayant la surface de la pièce et en mesurant les coordonnées le long d'un parcours.

Dans une variante connue, par exemple par EP0764827, US4270275 ou US6760977, le stylet est fixé sur un support avec trois goupilles radiales disposées symétriquement, chacune reposant sur deux sphères solidaires du corps du palpeur. Cette disposition constitue une liaison isostatique avec six points de contact indépendants; la position relative du stylet par rapport au corps du palpeur est ainsi définie avec précision. Le signal de déclenchement est généré lorsqu'une des goupilles se soulève des deux sphères sur lesquelles elle est normalement appuyée, interrompant ainsi le contact électrique entre les deux sphères. Ces palpeurs de simple fabrication allient fiabilité et précision, mais souffrent de plusieurs limitations. Notamment la sensibilité de la touche à une force transversale n'est pas constante, mais varie selon l'orientation de la force externe, présentant trois lobes en correspondance des directions des trois goupilles. Cette variation de la sensibilité est préjudiciable à la répétabilité du déclenchement et donc à la qualité de la mesure. Cette anisotropie peut être réduite an altérant la disposition des goupilles, par exemple comme décrit en EP1610087 ou DE3713415, sans toutefois l'éliminer complètement.

La demande de brevet EP0360853 tente de remédier à ces problèmes en proposant un palpeur dans lequel le circuit électrique est remplacé par des jauges de contrainte, directement sensibles à la force appliquée.

Dans d'autres réalisations, par exemple les palpeurs décrits dans les documents US5435072 et EP0415579 , le contact entre le stylet et la pièce à mesurer est détecté par un capteur de vibrations, ou par un capteur optique.
Les documents US2006070253, US5118956, JP2007101491 et US2004125382 dévoilent des palpeurs dont le mouvement de la touche est détecté par un dispositif optique comprenant un élément réfléchissant agencé directement sur une partie de la touche.
Le document US2011013199 dévoile un palpeur dont le mouvement de la touche est détecté par un dispositif optique comprenant une source lumineuse agencée directement sur une extrémité de la touche.

### Bref résumé de l'invention

Un but de la présente invention est de proposer un palpeur exempt des inconvénients des palpeurs connus, et notamment présentant une sensibilité constante aux forces latérales.

Un autre but de la présente invention est de proposer un palpeur plus sensible, rapide et précis des palpeurs de l'art antérieur.

Ces buts sont atteints par un palpeur présentant les caractéristiques des revendications annexées.

### Brève description des figures

Des exemples de mise en oeuvre de l'invention sont indiqués dans la description illustrée par les figures annexées dans lesquelles :
La figure 1 illustre un palpeur selon l'invention, sectionné.
La figure 2 illustre schématiquement un masque optique utilisable dans le cadre de l'invention.
Les Fig. 3a à 3c montrent un capteur d'image partagé en quatre quadrants .
La Fig. 4 montre schématiquement un circuit de traitement utilisable dans le cadre de l'invention.
Les Fig. 5a, 5b, et 6 illustrent des structures élastiques utilisables dans le cadre de l'invention.
Les Fig. 7 et 8 montrent un mode de réalisation de l'invention en éclaté et en section.
Les Fig. 9a et 9b illustrent deux possibles formes d'exécution de la structure élastique utilisée dans le mode de réalisation des figures 7 et 8.
La Fig. 10 montre une autre vue de la structure élastique représentée aux figure 9a et 9b.
La fig. 11 est une section de l'élément élastique de la figure 9b dans laquelle les degrés de liberté sont représentés.

### Exemple(s) de mode de réalisation de l'invention

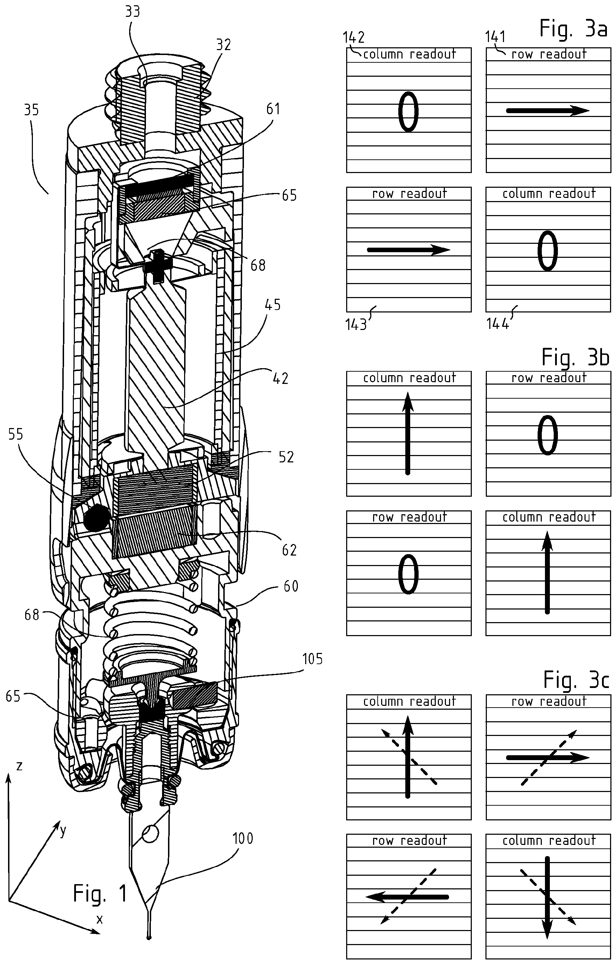

Avec référence à la figure 1, le palpeur de l'invention comprend, dans un mode de réalisation, un module de touche 60 avec un stylet 100 monté sur un support 105 maintenu élastiquement par le ressort 66 dans une position de repos définie par les six points de contact entre trois goupilles 65 (partiellement visibles) du support et six billes (non représentées) solidaires du module de touche. Cette disposition permet au stylet de se déplacer sous l'action d'une force externe, et de revenir exactement à la position de repos au cesser de cette force externe. Un certain espace (overtravel) étant requis pour arrêter le mouvement de la machine de mesure lorsque le système détecte un contact, ce montage élastique du stylet permet de limiter la force de contact pendant ce lapse de temps.

La façon de monter le stylet 100 dans le module de touche 60 n'est pas une caractéristique essentielle de l'invention, et d'autres schéma de montage pourraient être employés, selon les nécessités, sans abandonner le domaine de l'invention.

Le module de touche 60 est préférablement connecté de façon amovible au corps du palpeur 35, afin de pouvoir facilement échanger de stylet selon les exigences de mesure. Préférablement le module de touche 60 et le corps du palpeur peuvent être connectés et séparés automatiquement, de manière compatible avec les systèmes de changement automatique d'outils utilisés couramment dans les machines de mesure. Dans l'exemple illustré, la connexion a lieu par le couple d'aimants 52 et 62 disposés l'un dans le corps du palpeur, et l'autre dans le module de touche. Dans d'autres variantes, la connexion pourrait être réalisée par un connecteur mécanique, par exemple le connecteur automatique décrit dans le document EP1577050 au nom de la demanderesse. Si la modularité n'est pas requise, le module de touche et le corps du palpeur pourraient être connectés de manière permanente.

Le corps de la sonde 35 est équipé d'un dispositif de connexion 32 pour le fixer sur la plateforme mobile d'une machine à mesurer. Dans l'exemple illustré la connexion est réalisée par une vis M8 standard 32, d'autres mécanismes de connexion sont toutefois possibles. Le contact électrique axial 33 permet l'alimentation de l'électronique interne au corps du palpeur de la part d'une source d'alimentation externe, comme on le verra plus loin. Si nécessaire, l'unique contact 33 pourrait être remplacé par une pluralité de contacts.

Le module de touche est solidaire, par les aimants 52, 62 ou tout autre moyen de connexion idoine, d'un support 55 lequel est maintenu en position à l'intérieur du corps du palpeur 35 par une structure élastique 45 de façon à pouvoir suivre, dans des limites prédéterminées, les déflexions du stylet selon les axes x, y, z. La structure élastique peut, dans le cadre de la présente invention, présenter diverses formes. On dimensionnera, préférablement, la structure 45 de façon à qu'elle présente la même élasticité dans les trois directions.

La tige 42 est inférieurement solidaire du support 55 et porte à son extrémité supérieure une source lumineuse 68, par exemple une diode électro lumineuse (LED). Les mouvements déflexions du stylet sont ainsi convertis en déplacements proportionnels de la source lumineuse 68.

Selon un aspect important de l'invention, le corps du palpeur comprend également un capteur d'image, par exemple un capteur CCD 61 ou tout autre capteur optique d'image approprié, juxtaposé à la source lumineuse 68 de manière à recevoir la lumière émise par celle-ci. Un masque optique 65 codé est interposé sur le parcours lumineux entre la source 68 et capteur d'image 61. Le masque optique 65 projette sur le capteur une distribution non uniforme d'intensité lumineuse qui se déplace suivant les déplacements de la source LED 68. Un circuit de traitement, préférablement intégré sur le même chip de silicium du capteur d'image 61 détermine la déflexion du stylet selon les trois dimensions x, y, z relativement au corps du palpeur à partir de la distribution de l'intensité lumineuse sur la surface du capteur.

Optionnellement, le palpeur de l'invention inclut une pluralité de capteurs d'images juxtaposés à la source lumineuse et arrangés pour recevoir la lumière émise par celle-ci, par l'intermédiaire d'un masque optique commun ou de masques séparés pour chaque capteur. Comme pour la variante décrite auparavant, la déflexion du stylet en les trois dimensions x, y, z, est déterminée à partir de la distribution de l'intensité lumineuse enregistrée par les capteurs, par un circuit de traitement qui peut être en commun entre les capteurs d'images, ou comprenant des processeurs indépendants pour les capteurs individuels.

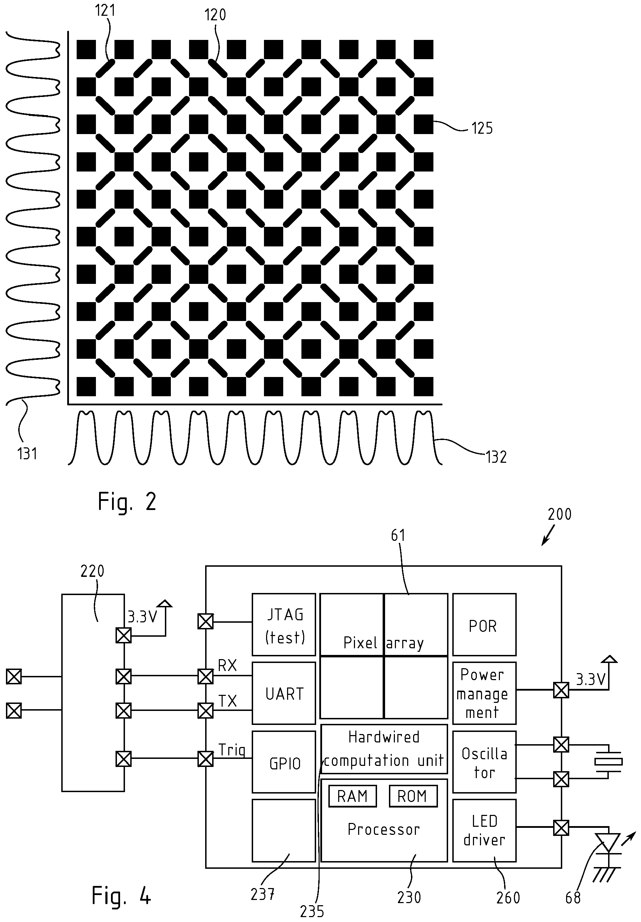

Les principes d'opération du transducteur constitué par la source 68, le masque 65 et le capteur d'image 61 sont décrits par les documents EP1750099B1 EP2169357A1 et WO2010112082A1, et ne seront pas analysés ici en détail. Dans l'exemple représenté sur la Fig. 2 le masque optique 65 porte un code bidimensionnel comprenant un réseau régulier de carreaux 125 et un code composé par un réseau de segments diagonaux. Dans l'exemple montré, par exemple, les segments parallèles au segment 121 encodent une valeur binaire '1'. tandis que les segments parallèles au segment 120 encodent une valeur binaire '0'.

Avantageusement, le code bidimensionnel représenté par les segments permet un positionnement absolu avec la résolution du réseau des carreaux 125, tandis que l'interpolation des signaux 131 et 132, obtenus par la projection selon les axes de la distribution lumineuse, permet une détermination précise de la position en x et y. D'autres dispositions sont toutefois possibles.

Afin d'accélérer la lecture et le traitement, les pixels sont optionnellement groupés en zones, chaque zone étant dédié à une mesure déterminée. Dans l'exemple illustré sur la figure 3a, les pixels du détecteur d'image 61 sont arrangés en quatre quadrants, 141, 142, 143, 144. Les quadrants 141 et 143 arrangés diagonalement sont arrangés pour déterminer les déplacements dans la direction x, tandis que les deux autres quadrants sont arrangés pour déterminer les déplacements dans la direction y. Avec référence à l'exemple montré sur la Figure 2, le circuit de traitement pourra se limiter au calcul d'une seule des deux projections 131 et, respectivement 132 dans chacun des quadrants, selon la direction de déplacement que l'on entend mesurer, limitant ainsi le nombre d'opérations. Le code enregistré dans le masque optique 65 pourrait aussi être partagé en quadrants, et simplifié en conséquence.

D'autres dispositions sont possibles, dans le cadre de l'invention, comprenant des variantes avec un seul capteur d'image non divisé en quadrant, ou deux ou plus capteurs d'image indépendants.

Selon un mode de réalisation alternatif, non illustré, le masque optique n'est pas présent, et on utilise en revanche une source lumineuse non uniforme, soit une source laquelle génère une distribution d'intensité lumineuse non uniforme sur la surface du capteur d'image 61. On pourrait employer à cette fin une LED avec un profil d'émission hautement anisotrope, une diode laser, un système optique générant des franges d'interférence, ou toute autre source non uniforme appropriée qui permet au circuit de traitement de déterminer la déflexion du stylet selon les trois dimensions x, y, z à partir de la distribution de l'intensité lumineuse sur la surface du capteur.

Selon une autre variante non illustrée, le masque optique ne comporte pas une pluralité de régions transparentes et opaques, comme sur la figure 3, mais une disposition appropriée de régions transparentes avec des caractéristiques optiques différentes, de manière à générer une distribution d'intensité lumineuse variable sur la surface du capteur. Avantageusement, on peut utiliser dans le masque optique un réseau de microlentilles qui augmente l'intensité et le contraste de la distribution lumineuse sur le capteur.

La Fig. 3a illustre la situation dans laquelle on a un déplacement de la source 68 selon l'axe x. Les quadrants 141 et 143 enregistrent un même déplacement, tandis que les deux autres quadrants ne relèvent aucune variation. Inversement, lorsque le déplacement est uniquement dans la direction de l'axe y, les deux quadrants 142 et 144 enregistrent un déplacement identique, et rien n'est mesuré par les quadrants 141 et 142, comme on peut le voir sur la figure 3b.

La Fig. 3c illustre la situation qui se présente lors d'un déplacement selon l'axe Z. En ce cas c'est l'échelle de l'image projetée par le masque 65 qui change. Les quadrants 141 et 143 mesurent des déplacement opposés, et de même les quadrants 142 et 144. Dans un cas général, ou pourra décomposer le mouvement relatif de la source 68 en une superposition de mouvements en x, y, et z.

Dans l'exemple décrit, l'image du masque projetée sur ledit capteur optique d'image change en fonction des déplacements de la touche 100 car, selon l'invention, la source lumineuse 68 est entraînée par les déplacements de la touche relativement au dit organe fixe. On pourrait aussi imaginer d'entraîner par la touche le masque ou le capteur d'image, avec le même effet. Selon des exemples comparatifs non revendiqués, source, masque et capteur restent fixes relativement au corps de la sonde, mais le parcours optique comprend un autre élément optique mobile apte a modifier l'image sur le capteur en fonction des déplacements de la touche 100, par exemple un miroir, une lentille, un prisme, ou toute autre élément optique ou combinaison d'éléments optiques entraînés par la touche 100.

Les déplacements de la source lumineuse 68 sont proportionnels à ceux du stylet de contact 100. Le circuit de traitement peut donc déclencher un signal de contact lorsque le déplacement de la touche dépasse un seuil déterminé. Avantageusement le seuil de déclenchement peut être modifié dynamiquement en correspondance avec les conditions de mesure, en reprogrammant le circuit de traitement de manière appropriée. On pourrait par exemple augmenter la valeur du seuil lorsque la machine de mesure se déplace rapidement, afin d'éviter des faux signaux déterminés par les vibrations, ou en correspondance des accélérations et décélérations du palpeur, et le réduire quand la machine se meut lentement pour rechercher la précision maximale. On pourrait aussi moduler le seuil de déclenchement en fonction du stylet employé, en choisissant un seuil plus grand lorsqu'on monte des stylets plus longs et lourds, donc plus sensibles aux vibrations.

Selon un aspect de l'invention, le circuit de traitement peut aussi effectuer une validation du signal de déclenchement, et distinguer les signaux dérivés d'un véritable contact de la touche 100 avec une pièce à mesurer, de faux signaux dus, par exemple, aux vibrations. La discrimination peut être effectuée sur la base de la durée du signal de déflexion ou sur son profil temporel, par exemple.

Le palpeur peut aussi être utilisé en un mode de balayage, dans lequel le circuit de traitement indique la déflexion du stylet selon un ou plusieurs axes, mesurée par le détecteur optique.

Selon une variante non illustrée, le capteur optique pourrait présenter une surface non plane, par exemple en toit ou en pyramide, pour augmenter la récolte de lumière et la sensibilité aux déplacements axiaux.

La Fig. 4 illustre schématiquement une structure possible d'un circuit de traitement 200 selon un aspect de l'invention. Avantageusement le capteur optique 61 est intégré dans le même circuit intégré du circuit de traitement. Le circuit 200 comprend en cet exemple un microcontrôleur 230, et une unité logique câblée 235 pour effectuer des opérations de traitement des pixels du capteur 61, par exemple projections, moyennes et/ou corrélations. L'unité 237 est un module arithmétique consacré au calcul de fonctions mathématiques ou trigonométriques, par exemple un module utilisant les techniques CORDIC (COordinate Rotation Digital Computer : calcul numérique par rotation de coordonnées). Optionnellement, les fonctions du microcontrôleur pourraient être assurées par d'autres moyens de calcul appropriés, par exemple un micro-processeur ou un DSP (digital signal processor).

Préférablement, le circuit 200 comprend aussi des capteurs de l'environnement, par exemple un accéléromètre et/ou un capteur de température. L'accéléromètre est utilisé, par exemple, pour déterminer le seuil dynamique du signal de déclenchement, ou si le palpeur a subi un choc. Le signal fourni par le capteur de température est utilisé, dans le circuit 200, pour compenser les erreurs thermiques.

Le circuit de traitement présente aussi une unité d'entrée/sortie 220, arrangé pour transmette les signaux requis à la machine de mesure, selon un format déterminé. Lorsque le palpeur est utilisé comme palpeur de déclenchement, le signal de déclenchement peut être transmis sous forme de variation du courant électrique absorbé par le palpeur. Cela permet l'utilisation du palpeur de l'invention en replacement des palpeurs à déclenchement classiques. Dans une autre variante de l'invention, l'unité d'entrée/sortie 220 permet une communication bidirectionnelle avec une unité externe, par exemple le contrôleur de la machine de mesure ou un système de mesure par ordinateur. Le palpeur peut alors envoyer par l'unité 220, des signaux de déclenchement et/ou des mesures de déflexion, et/ou des signaux de validation, dans un format approprié. Le palpeur peut aussi recevoir, par l'unité 220, des données de calibration, ou des valeurs de seuil, ou tout autre signal.

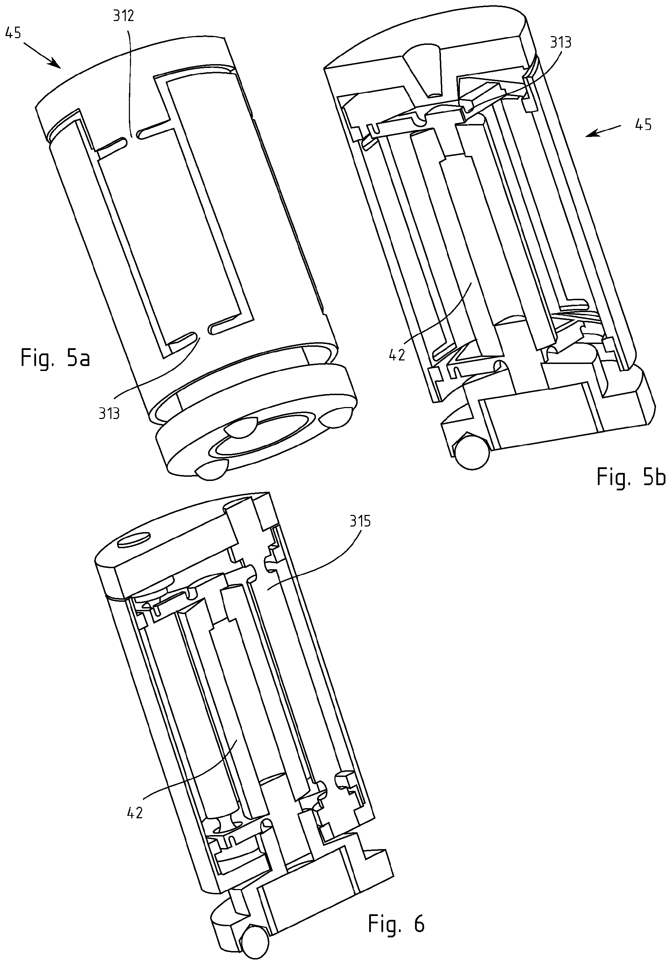

Les fig. 5a, 5b illustrent schématiquement des structures flexibles 45 utilisables dans le cadre de l'invention. Ces structures présentent plusieurs charnières élastiques permettant leur déflexion latérale (charnières 312) ou axiale (charnières 313). La figure 6 illustre une variante dans laquelle la flexibilité latérale est assurée par les colonnes 315. D'autres disposition sont toutefois possibles.

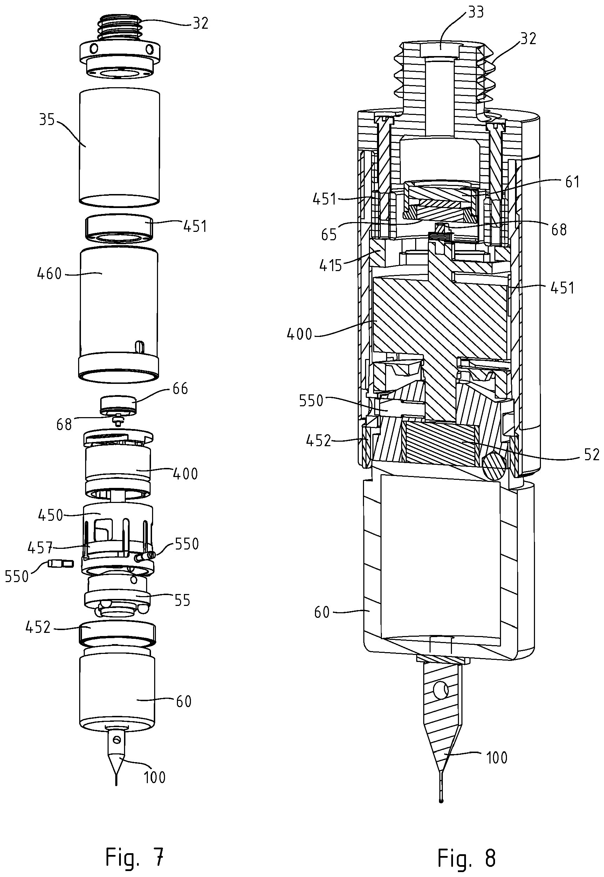

Une forme d'exécution préférée du palpeur de l'invention sera maintenant décrite avec référence aux figures 7, 8, 9a, 9b et 10. Selon ce mode de réalisation le palpeur comporte une structure élastique comme déjà mentionné auparavant consistant en une pièce métallique intégrale 400 qui relie le support 55 à son extrémité inférieure et la source lumineuse 68 à l'extrémité opposée.

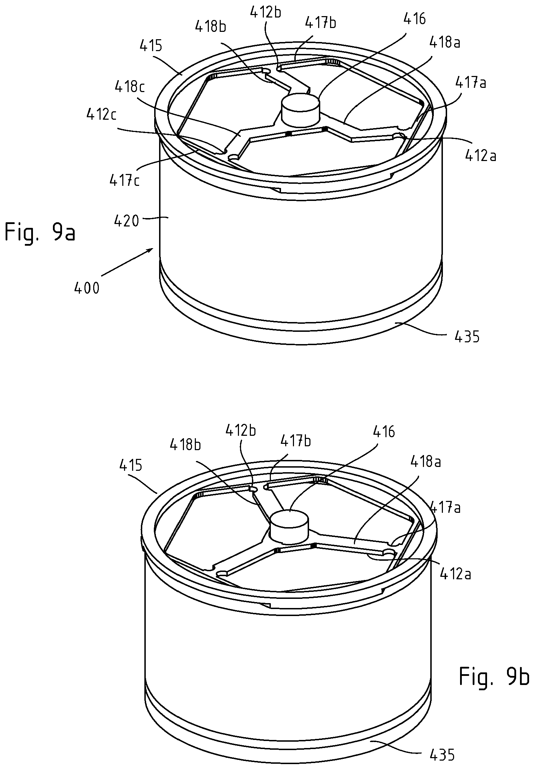

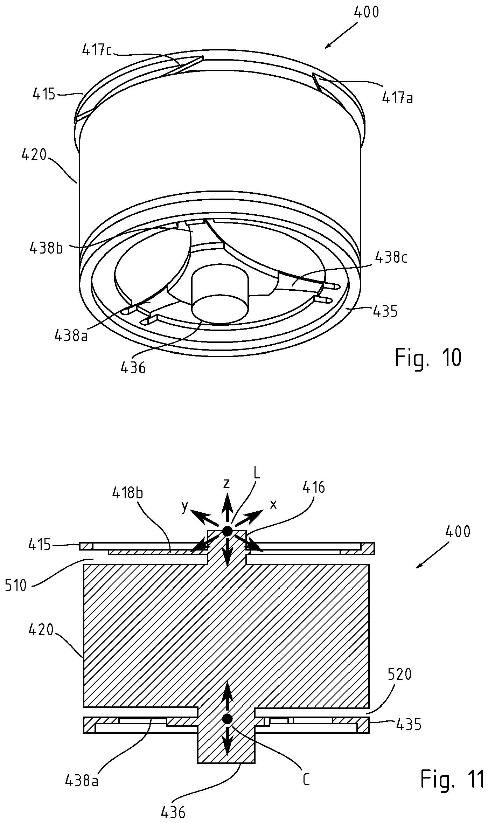

La structure élastique 400 est plus clairement visible sur les figures 9a, 9b et 10, les figures 9a et 9b représentant deux possibles variantes de la partie flexible supérieure, comme on le verra plus loin. Elle a une forme essentiellement cylindrique, et, selon l'invention, elle est réalisée d'une seule pièce métallique intégrale sans assemblages ou soudures. Préférablement la structure élastique 400 est obtenue par usinage, c'est-à-dire par tournage et fraisage d'un cylindre plein d'un matériau approprié, par exemple acier trempé. Toutefois, on pourrait aussi utiliser, dans le cadre de l'invention, d'autres techniques de fabrication, par exemple électroérosion, découpe laser, ou tout autre procédé d'enlèvement de matière approprié. On pourrait également réaliser la structure élastique 400 par moulage, ou par des procédés de fabrication additive, par exemple par frittage laser sélectif, stéréolithographie, impression 3D.

Selon un aspect de l'invention, la structure élastique 400 comporte un corps central 420 essentiellement cylindrique et deux parties terminales supérieure et inférieure, séparées du corps cylindrique par les deux saignées 510 et 520 visibles sur la figure 11. La partie terminale inférieure comporte une saille centrale 436 sur laquelle est fixé, par exemple par chassage, le support du module de touche 55. La partie terminale supérieure a aussi une saille centrale 416 (Fig. 9a-b) sur la quelle est montée la source lumineuse 68, par exemple par collage. Préférablement la source lumineuse est relié au circuit de traitement par des conducteurs flexibles ou un circuit imprimé flexible.

Les deux parties terminales comportent aussi chacune un anneau périphérique 435 respectivement 415 solidaire du corps du palpeur, tandis que la surface latérale du corps cylindrique 420 n'est pas en contact avec d'autres composantes et peut se déplacer sous l'effet des forces agissant sur la touche 100.

Les figures 9a, 9b illustrent deux possibles variantes de la partie terminale supérieure de l'élément élastique 400. Les deux variantes comportent trois poutres ou lames tangentielles 417a, 417b, 417c attachées par leurs extrémités à l'anneau périphériques 415 et trois bras radiaux 418a, 418b, 418c reliés d'une part au point de milieu de la lame tangentielle correspondante, et d'autre part au centre de la partie terminale. Des encoches 412a, 412b, 412c forment des charnières élastiques et améliorent les caractéristiques de flexibilité de l'ensemble, notamment dans les directions axiales et latérales. Les deux variantes diffèrent essentiellement dans la forme des bras 418a-c qui sont droits dans la deuxième version, et présentent un angle plus ou moins accentué dans la première, afin d'en augmenter la flexibilité.

Avantageusement, la partie terminale supérieure de l'élément élastique 400 peut être réalisée avec des opérations d'usinage conventionnelles : Ou peut par exemple tailler les bras 418a-c à la fraise par la face supérieure, et détacher les lames tangentielles 417a-c de l'anneau 415 par trois rainures droites fraisées 417a-c (mieux visibles sur la Fig. 10). La partie terminale est séparé du corps cylindrique 420 par la saignée 510 (Fig. 11).

La Fig. 10 illustre une possible structure pour la partie terminale inférieure de l'élément élastique 400. L'anneau périphérique 435 est relié à la partie centrale 436 par trois bras 438a-c qui présentent un col central mince, afin d'augmenter la flexibilité de l'ensemble surtout dans la direction axiale. Par rapport à la partie terminale supérieure, la partie inférieure est adaptée pour se déformer sous une force axiale, et est relativement rigide dans les directions orthogonales à l'axe. Tout comme la partie supérieure, la partie terminale inférieure de l'élément élastique 400 peut être réalisée avec des opérations d'usinage conventionnelles.

La Fig. 11 montre l'élément flexible en section et les mouvements possibles par la flexibilité des parties terminales. Comme déjà mentionné, les anneaux périphériques 435 et 415 sont fixés au corps du palpeur, tandis que la saille inférieure 436 est relié à la touche par le support 55 (Fig. 7), et la saille supérieure 416 porte la source lumineuse. Les forces agissant sur le stylet 100 induisent différentes déformations dans les parties terminales selon les caractéristiques mécaniques respectives.

La partie terminale inférieure est conformée de manière à présenter une flexibilité importante par rapport aux forces axiales, et est en revanche relativement rigide par rapport aux forces transversales à l'axe car les cols des bras 438a-c peuvent facilement se fléchir, mais la longueur des bras 438a-c est essentiellement immuable. Par conséquent le point 'C' situé à l'intersection des bras 438a-c se déplace selon l'axe 'z' .

En même temps, la flexibilité indépendante des bras 438a-c consent, si le stylet 100 subit une force latérale, une rotation de l'élément 420 autour du point (C) dans les deux directions transversales 'x' et 'y'. On peut donc modéliser les contraintes introduites par la partie terminale inférieure comme une glissière permettant le déplacement axial du centre 'C' combinée avec une rotule de centre 'C'.

La partie terminale supérieure permet, grâce à la disposition des bras radiaux connectés à des lames tangentielles, le déplacement de la source lumineuse au point 'L' selon les trois axes 'x', 'y', 'z'. La flexibilité desdits bras et lames détermine les forces de rappel, ou les valeurs quantitatives de flexibilité selon les trois axes. L'élasticité de la structure, définie par le rapport *k*=*x*/*F* entre le déplacement et la force, est de l'ordre de (1-10)x10⁻⁶ m/N. Ces valeurs de flexibilité assurent une bonne sensitivité et des fréquences propres de vibration assez élevées, au delà des fréquences de vibration typiques d'une CMM.

La disposition symétrique des bras 418a-c et 438 a-c permet d'obtenir une flexibilité hautement isotrope et essentiellement indépendante de la direction latérale de la force. L'invention n'est pas cependant limitée à des dispositifs avec trois bras et pourrait présenter deux, quatre ou plus bras, selon les circonstances.

L'assemblage de la structure élastique 400 dans le palpeur sera maintenant décrit avec références aux figures 7 et 8. Selon un mode préférentiel de réalisation, la structure élastique 400 est logée à l'intérieur d'une virole 450 avec des de branches flexibles 757. Lorsque la virole 450 est insérée à l'intérieur du tube 460 les branches 757 pincent l'anneau périphérique inférieur 435 le centrant en place. Axialement la face inférieure de la virole 450 appuie sur la bague filetée 452 et sa face supérieure soutient l'anneau périphérique supérieur 415 sur lequel est vissé une seconde bague filetée 451. Le serrage de la structure élastique 400 par pinçage à l'intérieur du corps du palpeur assure une rigidité et un centrage précis dans l'axe du palpeur, par les deux anneaux périphériques supérieur et inférieur.

L'ébat du stylet et les déformations de la pièce élastique 400 sont limités par les trois vis 550 à 120° qui s'engagent dans des logements appropriés du support du module de touche 55. Ces vis sont préférablement réglables afin d'ajuster leur position, et constituent des butées qui limitent les mouvements du module de touche, et donc les efforts transmis à l'élément élastique 400, ainsi que sa déformation. D'autres moyens de limitations sont toutefois possibles.

Les butées 550 ont donc la fonction d'assurer l'alignement du module et de protéger la pièce élastique 400. Le palpeur de l'invention comporte en effet des éléments fragiles, notamment la pièce élastique 400 qui sont susceptibles de se casser ou de s'altérer suite à des efforts excessifs, par exemple en cas de choc. En ce cas, lorsque la déformation de l'élément élastique dépasse une valeur prédéterminée, l'une des butées 550 touche la virole 450, ainsi que la force est directement à cette dernière, évitant ainsi tout dégât et améliorant la robustesse du palpeur.

## Revendications

1. Palpeur comprenant: un organe fixe (35); un ou plusieurs éléments élastiques (45, 400) ; une touche (100) maintenue par lesdits un ou plusieurs éléments élastiques (45, 400) dans une position de repos par rapport audit organe fixe, ladite touche pouvant se déplacer à partir de ladite position de repos en réponse à une force de déflexion ; un système de détection des déplacements de la touche comprenant une source lumineuse (68); un capteur optique (61) d'image pour recevoir la lumière émise par ladite source lumineuse ; dans lequel une distribution spatiale d'intensité sur ledit capteur optique d'image change en fonction des déplacements de ladite touche ;
**caractérisé en ce que**
lesdits un ou plusieurs éléments élastiques (45,400) consistent en une pièce métallique monobloc; et **en ce que** ladite source lumineuse (68) est entraînée par les déplacements de la touche (100) relativement au dit organe fixe (35).

2. Palpeur selon la revendication précédente, comprenant plusieurs capteurs optiques d'image recevant la lumière émise par ladite source lumineuse (68).

3. Palpeur selon l'une des revendications précédentes dans lequel ladite pièce métallique monobloc (45,400) a une forme essentiellement cylindrique avec deux éléments terminaux en correspondance des deux bases, ladite touche étant connectée avec un centre (436) d'un élément terminal, et ladite source lumineuse étant connectée avec un centre (416) de l'élément terminal opposé, chaque élément terminal présentant un anneau périphérique (415,435) solidaire du corps du palpeur (35) et une pluralité d'éléments déformables (412,417,418,438) consentant le déplacement selon trois axes de la source lumineuse (68).

4. Palpeur selon l'une des revendications précédentes, comprenant un masque (65) optique interposé sur le parcours lumineux entre ladite source lumineuse (68) et ledit capteur optique (61) d'image.

5. Palpeur selon la revendication précédente, dans lequel ledit masque (65) comporte un réseau de microlentilles.

6. Palpeur selon l'une des revendications précédentes, dans lequel la touche (100) est reliée de façon amovible au système de détection par une connexion magnétique (52,62) ou mécanique.

7. Palpeur selon la revendication précédente, dans lequel la touche (100) est portée par un module (60) changeable comprenant un support de touche (105) maintenu élastiquement dans une position de repos par une pluralité d'éléments (65) de positionnement définissant six points de contact.

8. Palpeur selon l'une des revendications précédentes, comprenant en outre un circuit de traitement (200) arrangé pour déterminer les déplacements de la touche en trois dimensions à partir de l'image enregistrée par le capteur optique (61) d'image.

9. Palpeur selon la revendication précédente, dans lequel le circuit de traitement inclut un des moyens de calcul (237), par exemple un microprocésseur, un micro-contrôleur, ou un DSP ou une unité CORDIC.

10. Palpeur selon l'une des revendications 8 ou 9, dans lequel le circuit de traitement est arrangé pour déclencher un signal de contact lorsque le déplacement de la touche dépasse un seuil déterminé.

11. Palpeur selon la revendication précédente, connectable à une source d'alimentation externe, dans lequel ledit signal de contact est une variation du courant électrique absorbé par le palpeur.

12. Palpeur selon la revendication 10 ou 11, dans lequel le seuil est programmable.

13. Palpeur selon l'une des revendications de 8 à 10, dans lequel le circuit de traitement est arrangé pour déclencher un signal de déflexion qui dépend des déplacements de la touche (100).

14. Palpeur selon l'une des revendications de 8 à 10, comprenant en outre un capteur de température, dans lequel le circuit de traitement est arrangé pour compenser les erreurs de température à partir du signal fourni par le capteur de température.

15. Palpeur selon l'une des revendications précédentes, comprenant un accéléromètre.

16. Palpeur selon la revendication 3, dans lequel ledit élément terminal dont le centre (416) est connecté avec la source lumineuse (68) comporte trois lames flexibles (417) tangentielles connectés par des bras (418) radiaux flexibles avec le centre (416).

17. Palpeur selon la revendication 3 ou 16, dans lequel ledit élément terminal dont le centre (436) est connecté avec la touche (100) comprend trois cols (438) flexibles.

18. Palpeur selon l'une des revendications précédentes, comprenant des butées (550) arrangées pour limiter la déformation desdits éléments élastiques et assurer sa robustesse lors des collisions.

## Patentansprüche

1. Sonde, umfassend: ein feststehendes Element (35); ein oder mehrere elastische Elemente (45, 400); eine Taste (100), die durch das besagte eine oder die besagten mehreren elastischen Elemente in einer Ruheposition in Bezug auf das besagte feststehende Element gehalten wird, wobei die besagte Taste sich als Reaktion auf eine Ablenkungskraft aus der besagten Ruheposition bewegen kann; ein System zum Erfassen der Bewegungen der Taste, umfassend eine Lichtquelle (68); einen optischen Bildsensor (61) zum Empfangen des von der Lichtquelle emittierten Lichtes; worin sich eine räumliche Intensitätsverteilung auf dem besagten optischen Bildsensor als eine Funktion der Bewegungen der besagten Taste ändert;
**dadurch gekennzeichnet, dass**
das besagte eine oder die besagten mehreren elastischen Elemente (45, 400) aus einem einteiligen Metallteil bestehen; und dass die besagte Lichtquelle durch die Bewegungen der Taste (100) in Bezug auf das besagte feststehende Element (35) angetrieben wird.

2. Sonde gemäss dem vorhergehenden Anspruch, umfassend eine Mehrzahl von optischen Bildsensoren, die das von der Lichtquelle (68) emittierte Licht empfangen.

3. Sonde gemäss einem der vorhergehenden Ansprüche, worin das besagte einteilige Metallstück (45, 400) eine im Wesentlichen zylindrische Form mit zwei Abschlusselementen in Übereinstimmung mit den zwei Basen aufweist, wobei die besagte Taste mit einer Mitte (436) eines Abschlusselements verbunden ist, und die besagte Lichtquelle mit einer Mitte (416) des gegenüberliegenden Abschlussstücks verbunden ist, wobei jedes Abschlusselement einen Umfangsring (415, 435) aufweist, der einstückig mit dem Körper der Sonde (35) ausgebildet ist, und mehrere verformbare Elemente (412, 417, 418, 438) aufweist, weche die Verschiebung entlang drei Achsen der Lichtquelle (68) ermöglichen.

4. Sonde gemäss einem der vorhergehenden Ansprüche, mit einer optischen Maske (65), die auf dem Lichtweg zwischen der besagten Lichtquelle (68) und dem besagten optischen Bildsensor (61) angeordnet ist.

5. Sonde gemäss dem vorhergehenden Anspruch, worin die besagte Maske (65) eine Mikrolinsenanordnung umfasst.

6. Sonde gemäss einem der vorhergehenden Ansprüche, worin die Taste (100) durch eine magnetische (52, 62) oder mechanische Verbindung lösbar mit dem Detektionssystem verbunden ist.

7. Sonde gemäss dem vorhergehenden Anspruch, worin die Taste (100) durch ein austauschbares Modul (60) getragen wird, das einen Tastenträger (105) umfasst, der elastisch in einer Ruheposition durch eine Mehrzahl von Positionierungselementen (65) gehalten wird, welche sechs Kontaktpunkte definieren.

8. Sonde gemäss einem der vorhergehenden Ansprüche, welche zudem eine Verarbeitungsschaltung (200) umfasst, die angeordnet ist, um die dreidimensionalen Bewegungen der Taste aus dem durch den optischen Bildsensor (61) aufgezeichneten Bild zu bestimmen.

9. Sonde gemäss dem vorhergehenden Anspruch, worin die Verarbeitungsschaltung Rechenmittel (237), beispielsweise einen Mikroprozessor, einen Mikrocontroller oder eine DSP oder eine CORDIC-Einheit umfasst.

10. Sonde gemäss einem der Ansprüche 8 oder 9, worin die Verarbeitungsschaltung angeordnet ist, um ein Kontaktsignal auszulösen, wenn die Bewegung der Taste einen bestimmten Schwellenwert überschreitet.

11. Sonde gemäss dem vorgehenden Anspruch, verbindbar mit einer externen Stromquelle, worin das besagte Kontaktsignal eine Variation des von der Sonde absorbierten elektrischen Stroms ist.

12. Sonde gemäss dem Anspruch 10 oder 11, worin der Schwellenwert programmierbar ist.

13. Sonde gemäss einem der Ansprüche 8 bis 10, worin die Verarbeitungsschaltung angeordnet ist, um ein Ablenkungssignal auszulösen, das von den Bewegungen der Taste (100) abhängt.

14. Sonde gemäss einem der Ansprüche 8 bis 10, zudem umfassend einen Temperatursensor, worin die Verarbeitungsschaltung angeordnet ist, um Temperaturfehler aus dem vom Temperatursensor bereitgestellten Signal zu kompensieren.

15. Sonde gemäss einem der vorhergehenden Ansprüche, umfassend einen Beschleunigungsmesser.

16. Sonde gemäss Anspruch 3, worin das besagte Abschlusselement, dessen Mitte (416) mit der Lichtquelle (68) verbunden ist, drei tangentiale flexible Schaufeln (417) umfasst, welche durch flexible radiale Arme (418) mit der Mitte (416) verbunden sind.

17. Sonde gemäss Anspruch 3 oder 16, worin das besagte Abschlusselement, dessen Mitte (436) mit der Taste (100) verbunden ist, drei flexible Kragen (438) umfasst.

18. Sonde gemäss einem der vorhergehenden Ansprüche, mit Anschlägen (550), welche angeordnet sind, um die Verformung der besagten elastischen Elemente zu begrenzen und ihre Robustheit bei Kollisionen sicherzustellen.

## Claims

1. Touch probe comprising: a fixed member (35); one or several elastic elements (45, 400); a feeler (100) held by said one or several elastic elements (45, 400) in a resting position relative to said fixed member, said feeler being capable of moving from said resting position in response to a deflection force; a system for detecting displacements of the feeler comprising a light source (68); an optical image sensor (61) for receiving the light emitted by said light source; wherein a spatial distribution of intensity on said optical image sensor changes according to the displacements of said feeler;
**characterized in that**
said one or several elastic elements (45, 400) consist of a mono-bloc metallic part; and **in that** said light source (68) is driven by the displacements of the feeler (100) relative to said fixed member (35).

2. Probe according to the preceding claim, including several optical image sensors receiving the light emitted by said light source (68).

3. Probe according to one of the preceding claims, wherein said mono-bloc metallic part (45, 400) has an essentially cylindrical shape with two end elements corresponding to the two bases, said feeler being connected with a centre (436) of an end element, and said light source being connected with a centre (416) of the opposite end element, where each end element exhibits a peripheral ring (415, 435) integrally united with the body of the probe (35) and a plurality of deformable elements (412, 417, 418, 438) allowing the displacement of the light source (68) along three axes.

4. Probe according to one of the preceding claims, comprising an optical mask (65) interposed on the light path between said light source (68) and said optical image sensor (61).

5. Probe according to the preceding claim, wherein said mask comprises a micro-lens array.

6. Probe according to one of the preceding claims, wherein the feeler (100) is connected in a removable fashion to the detection system by means of a magnetic (52, 62) or mechanical connection.

7. Probe according to the preceding claim, wherein the feeler (100) is borne by a changeable module (60) comprising a feeler support (105) held elastically in a resting position by a plurality of positioning elements (65) defining six contact points.

8. Probe according to one of the preceding claims, further comprising a processing circuit (200) designed to determine the displacements of the feeler in three dimensions from the image recorded by the optical image sensor (61).

9. Probe according to the preceding claim, wherein the processing circuit includes calculation means (237), for example a microprocessor, a microcontroller or a DSP or a CORDIC unit.

10. Probe according to one of the claims 8 or 9, wherein the processing circuit is designed to trigger a contact signal when the displacement of the feeler exceeds a determined threshold.

11. Probe according to the preceding claim, which can be connected to an external power supply, wherein said contact signal is a variation of the electric current absorbed by the probe.

12. Probe according to one the claims 10 or 11, wherein the threshold is programmable.

13. Probe according to one of the claims 8 to 10, wherein the processing circuit is designed to trigger a deflection signal depending on the displacements of the feeler (100).

14. Probe according to one of the claims 8 to 10, further comprising a temperature sensor, wherein the processing circuit is designed to compensate the temperature errors on the basis of the signal supplied by the temperature sensor.

15. Probe according to one of the preceding claims, comprising an accelerometer.

16. Probe according to claim 3, wherein said end element whose centre (416) is connected with the light source (68) comprises three tangential flexible blades (417) connected by flexible radial arms (418) with the centre.

17. Probe according to claim 3 or 16, wherein said end element whose centre (436) is connected with the feeler (100) comprises three flexible collars (438).

18. Probe according to one of the preceding claims, comprising stops (550) arranged to limit the deformation of said elastic elements and ensure robustness during collisions.
